# EUROPEAN PATENT SPECIFICATION

(11) **EP 4 344 912 B1**
(45) Date of publication and mention of the grant of the patent: **16.07.2025**
(21) Application number: 21961962.4
(22) Date of filing: 29.10.2021
(51) Int. Cl.: B60H 1/00, B60H 1/14

(54) **HEAT PUMP SYSTEM CONTROL METHOD AND APPARATUS FOR MULTI-TEMPERATURE ZONE AIR CONDITIONING BOX AND VEHICLE-MOUNTED TERMINAL**
VERFAHREN UND VORRICHTUNG ZUR STEUERUNG EINES WÄRMEPUMPENSYSTEMS FÜR EINEN KLIMAANLAGENKASTEN MIT MEHREREN TEMPERATURZONEN UND FAHRZEUGMONTIERTES ENDGERÄT
PROCÉDÉ ET DISPOSITIF DE COMMANDE DE SYSTÈME DE POMPE À CHALEUR POUR BOÎTE DE CLIMATISATION DE ZONE À PLUSIEURS TEMPÉRATURES ET TERMINAL EMBARQUÉ

(43) Date of publication of application: 03.04.2024
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: LI, Shuangqi, Hangzhou, Zhejiang 310051 (CN); MAO, Yuhu, Hangzhou, Zhejiang 310051 (CN)
(74) Representative: Barker Brettell LLP
(86) International application number: PCT/CN2021/127733
(87) International publication number: WO 2023/070610

(56) References cited:
- CN-A- 109 751 719
- CN-A- 112 078 325
- CN-A- 113 400 891
- CN-U- 208 134 010
- CN-U- 208 530 214
- CN-U- 209 290 107
- CN-U- 209 505 385
- CN-U- 211 969 120
- JP-A- 2016 141 381
- JP-A- H04 252 720
- US-A1- 2013 292 482
- US-A1- 2015 122 472

## Description

### TECHNICAL FIELD

The present invention relates to a control method for a heat pump system of a multi-temperature zone air conditioning box, a control apparatus for a heat pump system of a multi-temperature zone air conditioning box, and a vehicle-mounted terminal.

### BACKGROUND

With the development of electric vehicle industry in recent years, more and more heat pump systems have been applied. At present, when there is a heating demand in an occupant compartment, a vehicle may effectuate heating of the intake air to a heating temperature through a heat pump or a heater, for example, a positive temperature coefficient (PTC). The heated air reaches an air outlet through a heater core. In order to compensate for heat loss during air flowing, the heating temperature for the vehicle is usually higher than a target temperature.

In the prior art, in order to make the outlet air temperature at the air outlet reach the target temperature, the vehicle may control an air mixing damper to mix unheated air in hot air. There is a temperature sensor behind the heater core or air PTC of the vehicle. A heat loss parameter is preset in the vehicle. The vehicle may determine an opening value of the air mixing damper according to the air temperature acquired by the temperature sensor and the preset heat loss parameter, so as to adjust the outlet air temperature.

JP2016141381A discloses a vehicle air conditioning system that utilizes PTC (Positive Temperature Coefficient) elements to independently control the temperature of air blown into different areas of the vehicle's interior, such as the driver's and passenger's sides, and by adjusting the air volume and temperature of the PTC elements based on the set temperatures for each area, stable and precise temperature control even when there is a difference in the set temperatures among different sides is ensured.

US20150122472A1 discloses a vehicle air-conditioning device including a blower which blows air to a vehicle cabin through blowout openings, a refrigeration circuit through which refrigerant is circulated by an electric compressor, an interior heat exchanger disposed in the refrigeration circuit and exchanging heat between the refrigerant and a blown air, which is air that is blown by the blower, an interior/exterior air adjustment device adjusting a ratio of interior air and exterior air contained in the blown air, and a first blowing control portion controlling the electric compressor to stop, controlling the blower to operate, and controlling the interior/exterior air adjustment device.

US20130292482A1 discloses a control unit in an air conditioning system, which controls an adjusting unit to adjust a ratio between an amount of a first part of introduced air passing through a heater core and an amount of a second part of the introduced air bypassing the heater core to a first ratio at which the amount of the first part of the introduced air decreases from a maximized amount of the first part of the introduced air according to an increase in temperature of the heater core by a warming unit.

However, the prior art has a problem of poor accuracy in temperature regulation for the vehicle.

### SUMMARY

The present invention is set out in the appended independent claims. Preferred embodiments of the present invention are laid down in the appended dependent claims. In particular, the present invention provides a control method for a heat pump system of a multi-temperature zone air conditioning box, a control apparatus for a heat pump system of a multi-temperature zone air conditioning box and a vehicle-mounted terminal, which are used for solving the problem of poor accuracy in temperature regulation for a vehicle in the prior art.

In a first aspect, the present invention provides a control method for a heat pump system of a multi-temperature zone air conditioning box, which includes:
acquiring a temperature regulation mode and a target temperature for a vehicle, and a temperature adjustment demand and an outlet air temperature of each temperature zone of the vehicle, where the outlet air temperature is measured by a temperature sensor at an air outlet corresponding to the temperature zone; and
adjusting an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature.

Optionally, the temperature regulation mode includes one or more of compressor refrigeration, heater heating, motor and/or battery waste heat heating and compressor heating.

Optionally, when the temperature regulation mode is any one of compressor refrigeration, heater heating and compressor heating in which a rotation speed of a compressor is greater than a minimum rotation speed at which the compressor is operable, the adjusting the opening value of the air mixing damper in each temperature zone according to the temperature regulation mode, the target temperature, and the temperature adjustment demand and the outlet air temperature of each temperature zone includes:
determining a first temperature zone with a maximum temperature adjustment demand according to the temperature adjustment demand of each temperature zone;
setting the opening value of the air mixing damper in the first temperature zone as a fixed value; and
adjusting opening values of air mixing dampers in other temperature zones except for the first temperature zone according to the target temperature and the outlet air temperatures of the other temperature zones.

Optionally, when the temperature regulation mode is motor and/or battery waste heat heating or compressor heating in which a rotation speed of a compressor is less than or equal to a minimum rotation speed at which the compressor is operable, the adjusting the opening value of the air mixing damper in each temperature zone according to the temperature regulation mode, the target temperature, and the temperature adjustment demand and the outlet air temperature of each temperature zone includes:
adjusting the opening value of the air mixing damper in each temperature zone according to the target temperature and the outlet air temperature of each temperature zone.

Optionally, the adjusting the opening value of the air mixing damper in each temperature zone according to the target temperature and the outlet air temperature of each temperature zone includes:
determining a target temperature difference according to a difference between the outlet air temperature and the target temperature; and
determining the opening value of the air mixing damper according to a product of the target temperature difference and a preset parameter.

In the control method according to the first aspect of the present invention, the temperature adjustment demand of the temperature zone is determined according to air output at the air outlet corresponding to the temperature zone.

In a second aspect, the present invention provides a control apparatus for a heat pump system of a multi-temperature zone air conditioning box, which includes:
an acquisition module, configured to acquire a temperature regulation mode and a target temperature for a vehicle, and a temperature adjustment demand and an outlet air temperature of each temperature zone of the vehicle; and
a control module, configured to adjust an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature.

Optionally, the temperature regulation mode includes one or more of compressor refrigeration, heater heating, motor and/or battery waste heat heating and compressor heating.

Optionally, when the temperature regulation mode is any one of compressor refrigeration, heater heating and compressor heating in which a rotation speed of a compressor is greater than a minimum rotation speed at which the compressor is operable, the control module is specifically configured to:
determine a first temperature zone with a maximum temperature adjustment demand according to the temperature adjustment demand of each temperature zone;
set the opening value of the air mixing damper in the first temperature zone as a fixed value; and
adjust opening values of air mixing dampers in other temperature zones except for the first temperature zone according to the target temperature and the outlet air temperatures of other temperature zones.

Optionally, when the temperature regulation mode is motor and/or battery waste heat heating or compressor heating in which a rotation speed of a compressor is less than or equal to a minimum rotation speed at which the compressor is operable, the control module is specifically configured to:
adjust the opening value of the air mixing damper in each temperature zone according to the target temperature and the outlet air temperature of each temperature zone.

Optionally, the control module is specifically configured to:
determine a target temperature difference according to a difference between the outlet air temperature and the target temperature; and
determine the opening value of the air mixing damper according to a product of the target temperature difference and a preset parameter.

In the control apparatus according to the second aspect of the present invention, the temperature adjustment demand of the temperature zone is determined according to air output at the air outlet corresponding to the temperature zone.

In a third aspect, the present invention provides a vehicle-mounted terminal, which includes: a memory and a processor;
wherein the memory is configured to store computer instructions; the processor is configured to implement the control method for the heat pump system of the multi-temperature zone air conditioning box as described in the first aspect and any possible preferred design of the first aspect, according to the computer instructions stored in the memory.

In a fourth aspect, the present invention provides a vehicle, each air outlet of the vehicle is provided with a temperature sensor, and the vehicle is provided with the vehicle-mounted terminal as described in the third aspect.

In a fifth aspect, the present invention provides a computer-readable storage medium having computer instructions stored therein, wherein when the computer instructions are executed by a processor, the control method for the heat pump system of the multi-temperature zone air conditioning box as described in the first aspect and any possible preferred design of the first aspect, is implemented.

In a sixth aspect, the present invention provides a computer program product, including computer instructions, wherein the computer instructions, when executed by a processor, implement the control method for the heat pump system of the multi-temperature zone air conditioning box as described in the first aspect and any possible preferred design of the first aspect.

The control method for the heat pump system of the multi-temperature zone air conditioning box provided in the present invention achieves the effect of precise control on the heating demand of an occupant compartment by means of acquiring the temperature regulation mode and the target temperature for the vehicle, and the temperature adjustment demand and the outlet air temperature of each temperature zone of the vehicle, and adjusting the opening value of the air mixing damper in each temperature zone according to the temperature regulation mode, the target temperature, and the temperature adjustment demand and the outlet air temperature of each temperature zone, so that the outlet air temperature of each temperature zone reaches the target temperature. At the same time, in the control method provided in the present invention, the temperature sensor disposed at the air outlet is used instead of a temperature sensor disposed behind a heater core in the prior art, thereby reducing the costs, and achieving the purpose of energy conservation.

### BRIEF DESCRIPTION OF DRAWINGS

In order to more clearly explain technical solutions in the present invention, the drawings to be used in the description of the embodiments will be briefly introduced below. Obviously, the drawings in the following description are only intended for some embodiments of the present invention, and other drawings may be obtained based on these drawings without creative labor for those of ordinary skill in the art.
FIG. 1 is a schematic structural diagram of a heat pump system configured to be controlled by a control method implemented by a vehicle-mounted terminal provided in an embodiment of the present invention.
FIG. 2 is a flowchart of a control method for a heat pump system of a multi-temperature zone air conditioning box provided in an embodiment of the present invention.
FIG. 3 is a schematic structural diagram of a control apparatus for a heat pump system of a multi-temperature zone air conditioning box provided in an embodiment of the present invention.
FIG. 4 is a schematic structural diagram of hardware of a vehicle-mounted terminal provided in an embodiment of the present invention.
FIG. 5 is a schematic structural diagram of a vehicle provided in an embodiment of the present invention.

### DETAILED DESCRIPTION

In order to make the purposes, technical solutions and advantages of the present invention clearer, the technical solutions in the present invention will be described clearly and comprehensively in combination with the drawings in the present invention. Obviously, the described embodiments are part of the embodiments of the present invention, but not all of them.

The terms "first", "second", "third", "fourth" and the like in the description and claims and the above drawings of the present invention are used to distinguish similar objects, and are not necessarily used to describe a specific order or sequence. It should be understood that data used in this way is interchangeable under appropriate circumstances. For example, first information may also be called second information without departing from the scope of this text, and similarly, the second information may also be called the first information.

Depending on the context, the word "if" as used herein may be interpreted as "when" or "in response to determining".

Furthermore, as used herein, the singular forms "a", "an" and "the" are intended to also include the plural forms, unless otherwise indicated herein.

It should be further understood that the terms "containing" and "including" indicate the presence of the stated feature, step, operation, element, component, item, category and/or group, but do not exclude the presence, occurrence or addition of one or more other features, steps, operations, elements, components, items, categories and/or groups.

The terms "or" and "and/or" as used herein are to be interpreted as inclusive or mean any one or any combination. Therefore, "A, B or C" or "A, B and/or C" means "any of the following: A; B; C; A and B; A and C; B and C; A, B and C". An exception to this definition occurs only when a combination of elements, functions, steps or operations are inherently mutually exclusive in some way.

In a traditional fuel vehicle, when there is a heating demand in an occupant compartment, the waste heat generated by the engine and the waste heat in the gas after combustion may heat the air through heat transfer. The heat transfer process is realized by heated cooling liquid. After gaining heat from the waste heat, the liquid coolant may flow through a heater core in a heating ventilation and air conditioning (HVAC) system, thus transferring heat to the air. The heated air will reach the occupant compartment through an air outlet to meet the heating demand for the occupant compartment. Because there are always enough waste heat sources in traditional fuel vehicles, the temperature of the air passing through the heater core is usually high enough. There is a need for a vehicle-mounted terminal to dispose a temperature sensor behind the heater core, so as to acquire a temperature of the heated air from the heater core. Thereafter, the vehicle-mounted terminal may mix unheated air into the heated air by controlling the opening value of the air mixing damper, so that the air may reach the target temperature when it is blown out from the air outlet.

In electric vehicles, the waste heat generated by the vehicles is far less than that by fuel vehicles. With the development of electric vehicle industry in recent years, more and more heat pump systems have been applied to the vehicles. When there is a heating demand in an occupant compartment, a vehicle may effectuate heating of the intake air to a heating temperature through a heat pump or a heater, for example, a positive temperature coefficient (PTC). Then, the vehicle-mounted terminal controls the air mixing damper in such a manner that the outlet air temperature at the air outlet reaches the target temperature. A calculation method of the heating temperature of the heater core for air conditioning lies in that: assuming that the opening of the air mixing damper is at a 100% full warm position, the heating temperature is equal to a sum of the target temperature and a temperature compensation.

The temperature compensation is determined by ambient temperature, air volume and other factors. Under different ambient temperatures and air volumes, the heat loss from the heater core to the air outlet varies. Therefore, the temperature compensation calculated based on this heat loss also varies. In general, in order to ensure that the temperature at the air outlet may meet the heating demand, the vehicle-mounted terminal will consciously increase the temperature compensation to meet the heating demand of the occupant compartment.

In order to save the cost, the present invention puts forward a feasible solution to cancel the temperature sensor behind the heater core. And, because the air mixing damper is disposed behind the heater core, if a temperature sensor is disposed on a surface of the heater core, the disposition of the temperature sensor may inevitably affect the operation of the air mixing damper, thus bringing about potential safety hazards. At the same time, in order to respond to the high demand of electric vehicles for power consumption, strategies for more precise control of the heating demand are needed for the vehicles.

In view of the above problems, the present invention proposes a control method for a heat pump system of a multi-temperature zone air conditioning box. In the present invention, when the occupant compartment only has a refrigeration demand, a vehicle-mounted terminal may fix the air mixing damper at a full cool position, thus ensuring the refrigeration demand of the vehicle. In the present invention, the air mixing damper may also be fixed at a full warm position when the occupant compartment has a heating demand and heating is rendered for the occupant compartment by using PTC, so as to control the outlet air temperature through PTC and make it reach a target temperature. In present invention, the vehicle-mounted terminal may also make the outlet air temperature reach the target temperature by adjusting the opening value of the air mixing damper, when the occupant compartment has a heating demand and motor and/or battery waste heat heating is used. In the present invention, when the occupant compartment has a heating demand and a compressor is used to heat the occupant compartment, the vehicle-mounted terminal may also control the air mixing damper according to a rotation speed of the compressor. When the rotation speed of the compressor is a non-minimum rotation speed at which the compressor is operable, for example, higher than 850 rpm, the vehicle-mounted terminal may fix the air mixing damper at the full warm position. Further, the vehicle-mounted terminal may make the outlet air temperature reach the target one by controlling the rotation speed of the compressor. When the rotation speed of the compressor is kept for more than T seconds at the minimum rotation speed at which the compressor is operable, and the difference between the outlet air temperature and the target temperature is greater than a first threshold, the vehicle-mounted terminal may fix the rotation speed of the compressor at the minimum rotation speed at which the compressor is operable. T is an empirical value, and the minimum rotation speed at which the compressor is operable may be 850 rpm. At the same time, the vehicle-mounted terminal may also adjust the opening of air mixing damper in such a manner that the outlet air temperature reaches the target one. The present invention not only cancels the temperature sensor behind the heater core, but also reduces the cost. Moreover, the present invention also realizes the precise control of the heating demand of occupant compartment through the vehicle-mounted terminal, thus achieving the purpose of energy conservation.

Technical solutions of the present invention will be described in detail with specific embodiments. The following specific embodiments may be combined with each other, and the same or similar concepts or processes may not be repeated in some embodiments.

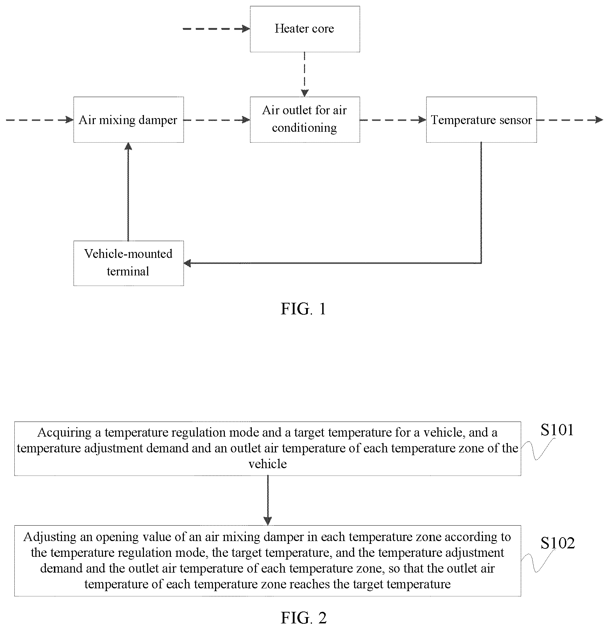

FIG. 1 shows a schematic structural diagram of a heat pump system configured to be controlled by a control method implemented by a vehicle-mounted terminal provided in an embodiment of the present invention. As shown in FIG. 1, dotted lines indicate a circulation path of air. When incoming air flows through a heater core, the air is heated. The heated air reaches an occupant compartment through an air outlet for air conditioning, to realize the heating of the occupant compartment. When the air passes through the air outlet for air conditioning, a temperature sensor disposed at the air outlet for air conditioning obtains an outlet air temperature. The temperature sensor uploads the measured outlet air temperature to a vehicle-mounted terminal. After the vehicle-mounted terminal obtains the measured temperature of the temperature sensor, it controls an air mixing damper based on the outlet air temperature and the target temperature. The vehicle-mounted terminal may adjust the outlet air temperature by adjusting an opening value of the air mixing damper and the amount of unheated air that is mixed in.

In the present invention, the vehicle-mounted terminal is taken as an execution subject to execute a control method for a heat pump system of a multi-temperature zone air conditioning box in the following embodiments. Specifically, the execution subject may be a hardware device of the vehicle-mounted terminal, or a software application in the vehicle-mounted terminal that implements the following embodiments, or a computer-readable storage medium installed with the software application that implements the following embodiments, or codes of the software application that implements the following embodiments.

FIG. 2 shows a flowchart of a control method for a heat pump system of a multi-temperature zone air conditioning box provided in an embodiment of the present invention. On the basis of the embodiment shown in FIG. 1, as shown in FIG. 2, the vehicle-mounted terminal is taken as the execution subject, and the method of this embodiment may include the following steps.

S101, acquiring a temperature regulation mode and a target temperature for a vehicle, and a temperature adjustment demand and an outlet air temperature of each temperature zone of the vehicle, where the outlet air temperature is measured by a temperature sensor at an air outlet corresponding to the temperature zone.

In this embodiment, the vehicle-mounted terminal may acquire the temperature regulation mode of the vehicle. The temperature regulation mode may include one or more of compressor refrigeration, heater heating, motor and/or battery waste heat heating and compressor heating. When the temperature regulation mode is compressor heating, the following cases may correspond to different calculation methods of the opening value of the air mixing damper, i.e., the case that the rotation speed of the compressor is greater than the minimum rotation speed at which the compressor is operable and the case that the rotation speed of the compressor is less than or equal to the minimum rotation speed at which the compressor is operable.

The vehicle-mounted terminal may also acquire the target temperature. The target temperature is an air conditioning temperature set by the user through the vehicle-mounted terminal. The temperature adjustment in this embodiment is configured to adjust the outlet air temperature at the air outlet, so that the outlet air temperature at each air outlet reaches the target temperature, and then the temperature of the occupant compartment reaches the target temperature.

The vehicle-mounted terminal may also acquire the temperature adjustment demand of each temperature zone. Each temperature zone includes at least one air outlet. For example, a driver's seat of the occupant compartment may be a temperature zone, and this temperature zone may include two air outlets on left and right sides of the steering wheel. For another example, a rear seat of the occupant compartment may be a temperature zone, and this temperature zone may include an air outlet. Temperature adjustment demands of different temperature zones are determined according to air output at air outlets in different temperature zones. For example, when the two air outlets in the temperature zone corresponding to the driver's seat are all open, the corresponding temperature adjustment demand thereof may be 2. When only one of the two air outlets in the temperature zone corresponding to the driver's seat is opened, the corresponding temperature adjustment demand thereof may be 1. When one of the two air outlets in the temperature zone corresponding to the driver's seat is closed, and the other is half-opened, the temperature adjustment demand thereof may be 0.5. For another example, when a size of the air outlet for the rear seat is 1.5 times that of the air outlet for the driver's seat and when the air outlet of the rear seat is opened, the temperature adjustment demand of the temperature zone is 1.5.

The vehicle-mounted terminal may also acquire the outlet air temperature of each air outlet through the temperature sensor disposed at each air outlet.

S102, adjusting an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature.

In this embodiment, the vehicle-mounted terminal may calculate the opening value of the air mixing damper according to the temperature regulation mode, the target temperature, and the temperature adjustment demand and the outlet air temperature of each temperature zone acquired in S101. The vehicle-mounted terminal may adjust the amount of untreated air that may be mixed in each air mixing damper by controlling the opening of the air mixing damper. The vehicle-mounted terminal may realize the adjustment of the temperature of the air blown out from the air outlet by adding different amounts of untreated air to cold air/hot air.

In an example, when an air mixing damper in the vehicle corresponds to multiple air outlets, the amount of untreated air entering from the air mixing damper will determine the outlet air temperatures at the multiple air outlets corresponding to the air mixing damper. In this case, after acquiring the temperatures at the multiple air outlets corresponding to the air mixing damper, the vehicle-mounted terminal may calculate the temperature difference of the multiple air outlets as a whole to acquire the opening of the air mixing damper. The specific steps may include:
Step 1, determining a weight of each air outlet according to a distance from each air outlet of the multiple air outlets to the heater core;
Step 2, calculating a temperature difference between the outlet air temperature at each air outlet and the target temperature according to the outlet air temperature at each air outlet;
Step 3, calculating a final target temperature difference according to the weight and the temperature difference of each air outlet; and
Step 4, determining the opening value of the air mixing damper according to a product of the target temperature difference and a preset parameter.

In another example, each air outlet in each temperature zone of the vehicle may correspond to an air mixing damper. The air mixing damper may mix the untreated air with the air to be blown out from the air outlet, so that the outlet air temperature at the air outlet reaches the target temperature. In this case, the vehicle-mounted terminal may calculate the opening value of the air mixing damper at each air outlet according to the outlet air temperature of the air outlet. The specific steps thereof may include:
Step 1, calculating a temperature difference between the outlet air temperature of each air outlet and the target temperature according to the outlet air temperature of the air outlet; and
Step 2, determining the opening value of the air mixing damper according to a product of the temperature difference of the air outlet and a preset parameter.

In this embodiment, besides directly calculating the opening value of the air mixing damper, it is also necessary to adjust the opening value of the air mixing damper according to the temperature regulation mode. Under different temperature regulation modes, different configurations of opening values may be shown in the following examples.

In an example, when the temperature regulation mode is any one of compressor refrigeration, heater heating and compressor heating in which the rotation speed of the compressor is greater than the minimum rotation speed at which the compressor is operable, the specific calculation method of the opening value includes the following steps.

Step 1, determining a first temperature zone with a maximum temperature adjustment demand according to the temperature adjustment demand of each temperature zone.

In this step, the vehicle-mounted terminal may acquire the air output of each temperature zone. The vehicle-mounted terminal may determine the temperature adjustment demand of each temperature zone according to the air output. The vehicle-mounted terminal may compare temperature adjustment demands of individual temperature zones, thus determining a temperature zone with a maximum temperature adjustment demand. The vehicle-mounted terminal may determine the temperature zone with the maximum temperature adjustment demand to be the first temperature zone, and determine temperature zones except for the first temperature zone to be other temperature zones.

Step 2, setting an opening value of an air mixing damper in the first temperature zone as a fixed value.

In this step, the fixed value includes 0% and 100%. When the temperature regulation mode is heating, the fixed value may be set to 100%, that is, full warm. When the temperature regulation mode is refrigeration, the fixed value may be set to 0, that is, full cool.

Step 3, adjusting opening values of air mixing dampers in other temperature zones except for the first temperature zone according to the target temperature and outlet air temperatures of the other temperature zones.

In this step, the vehicle-mounted terminal may calculate the opening value of the air mixing damper in each temperature zone by the method calculating the opening value of the air mixing damper according to the outlet air temperature and the target temperature in the previous example.

For example, when the occupant compartment only has a refrigeration demand, the temperature regulation mode is compressor refrigeration. The vehicle-mounted terminal may determine, from multiple temperature zones, the temperature zone with a maximum refrigeration demand in the air conditioning box as the first temperature zone. The vehicle-mounted terminal may fix the air mixing damper corresponding to the first temperature zone at a full cool position. At the same time, the vehicle-mounted terminal regulates the opening values of the air mixing dampers in other temperature zones according to the outlet air temperatures at the air outlets in the other temperature zones and the target temperature.

For another example, when the occupant compartment has a heating demand and only PTC is used to heat the occupant compartment, the vehicle-mounted terminal may determine, from multiple temperature zones, the temperature zone with a maximum heating demand in the air conditioning box as the first temperature zone. The vehicle-mounted terminal may fix the air mixing damper corresponding to the first temperature zone at a full warm position. At the same time, the vehicle-mounted terminal make the outlet air temperature corresponding to the first temperature zone reach the target one by controlling an output power of the PTC in the first temperature zone. The vehicle-mounted terminal regulates the opening values of the air mixing dampers in other temperature zones according to the outlet air temperatures at the air outlets in the other temperature zones and the target temperature.

For another example, when the occupant compartment has a heating demand and both the PTC and the compressor are used to heat the occupant compartment, the vehicle-mounted terminal may determine, from multiple temperature zones, the temperature zone with the maximum heating demand in the air conditioning box as the first temperature zone. The vehicle-mounted terminal may fix the air mixing damper corresponding to the first temperature zone at the full warm position. At the same time, the compressor runs at an upper speed limit set in this working condition, and the vehicle-mounted terminal may control the output power of the PTC to make the outlet air temperature corresponding to the first temperature zone reach the target one. The vehicle-mounted terminal regulates the opening values of the air mixing dampers in other temperature zones according to the outlet air temperatures at the air outlets in the other temperature zones and the target temperature.

For another example, when the occupant compartment has a heating demand, and only the compressor is used to heat the occupant compartment, if the rotation speed of the compressor is a non-minimum rotation speed at which it is operable, for example, the rotation speed of the compressor is higher than 850 rpm, the vehicle-mounted terminal may determine, from multiple temperature zones, the temperature zone with the maximum heating demand in the air conditioning box as the first temperature zone. The vehicle-mounted terminal may fix the air mixing damper corresponding to the first temperature zone at the full warm position. The vehicle-mounted terminal may make the outlet air temperature corresponding to the first temperature zone reach the target one by controlling the rotation speed of the compressor. At the same time, the vehicle-mounted terminal regulates the opening values of the air mixing dampers in other temperature zones according to the outlet air temperatures at the air outlets in the other temperature zones and the target temperature.

In another example, when the temperature regulation mode is motor and/or battery waste heat heating or compressor heating in which the rotation speed of the compressor is less than or equal to the minimum rotation speed at which the compressor is operable, the opening value of the air mixing damper may be determined according to the target temperature and the outlet air temperature of each temperature zone, thus completing the adjustment of the air mixing damper in each temperature zone. The rotation speed of the compressor is less than or equal to the minimum rotation speed at which the compressor is operable, then the rotation speed of the compressor may be 850 rpm.

For example, when the occupant compartment has a heating demand, and the motor and/or battery waste heat heating is used to heat the occupant compartment, the vehicle-mounted terminal may not directly limit the opening of any air mixing damper. The opening value of each air mixing damper in the vehicle may be calculated by the outlet air temperature and the target temperature, so as to realize the regulation of the opening of each air mixing damper and make the outlet air temperature at each air outlet reach the target temperature.

For another example, when the occupant compartment has a heating demand and only the compressor is used to heat the occupant compartment, if preset conditions are met, the rotation speed of the compressor is fixed at the minimum rotation speed at which it is operable, and the opening of any air mixing damper is not directly limited. The opening value of each air mixing damper in the vehicle may be calculated by the outlet air temperature and the target temperature, so as to achieve regulation of the opening of each air mixing damper and make the outlet air temperature at each air outlet reach the target temperature. The preset conditions may include that the duration of the rotation speed of the compressor exceeds a first threshold, and that the difference between the outlet air temperature and the target temperature is greater than a second threshold.

In the control method for the heat pump system of the multi-temperature zone air conditioning box provided in the present invention, the vehicle-mounted terminal may acquire the temperature regulation mode and the target temperature for the vehicle, the temperature adjustment demand and the outlet air temperature of each temperature zone of the vehicle. The vehicle-mounted terminal may adjust opening value of the air mixing damper in each temperature zone according the temperature regulation mode, the target temperature and the temperature adjustment demand and the outlet air temperature of each temperature zone, so that the outlet air temperature of each temperature zone reaches the target temperature. In the present invention, precise control of the heating/refrigeration demand of the occupant compartment is realized by combining the following two ways: directly limiting the opening value of the air mixing damper according to the temperature regulation mode and calculating the opening value of the air mixing damper according to the difference between the outlet air temperature and the target temperature. At the same time, the temperature sensor disposed at the air outlet is used in the present invention instead of the temperature sensor disposed behind the heater core in the prior art, so that the cost is reduced and the purpose of energy saving is achieved.

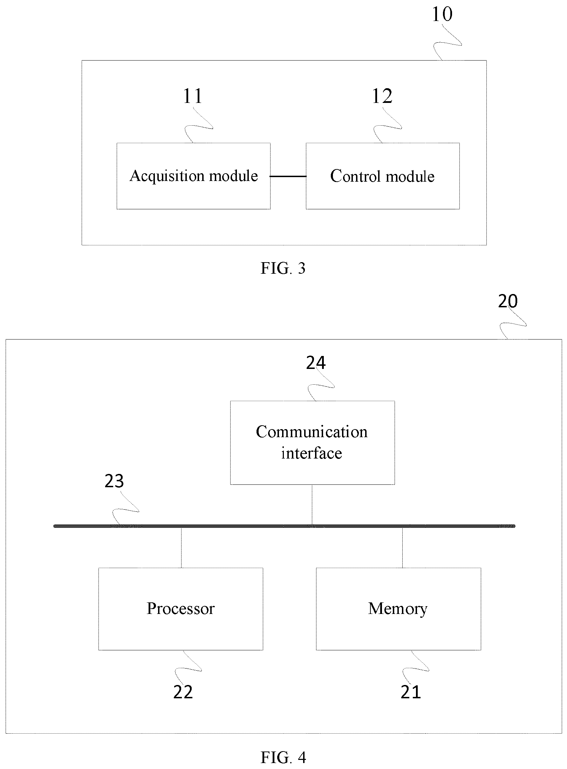

FIG. 3 shows a schematic structural diagram of a control apparatus for a heat pump system of a multi-temperature zone air conditioning box provided in an embodiment of the present invention. As shown in FIG. 3, a control apparatus 10 for a heat pump system of a multi-temperature zone air conditioning box of this embodiment is configured to realize operations corresponding to the vehicle-mounted terminal in any of the above method embodiments, and the control apparatus 10 for the heat pump system of the multi-temperature zone air conditioning box of this embodiment includes:
an acquisition module 11, configured to acquire a temperature regulation mode and a target temperature for a vehicle, and a temperature adjustment demand and an outlet air temperature of each temperature zone of the vehicle, where the outlet air temperature may be measured by a temperature sensor at an air outlet corresponding to the temperature zone; and
a control module 12, configured to adjust an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature.

In an example, the temperature regulation mode includes one or more of compressor refrigeration, heater heating, motor and/or battery waste heat heating and compressor heating.

In an example, when the temperature regulation mode is any one of compressor refrigeration, heater heating and compressor heating in which a rotation speed of a compressor is greater than a minimum compressor speed at which the compressor is operable, the control module 12 is specifically configured to:
determine a first temperature zone with a maximum temperature adjustment demand according to the temperature adjustment demand of each temperature zone;
set the opening value of the air mixing damper in the first temperature zone as a fixed value; and
adjust opening values of air mixing dampers in other temperature zones except for the first temperature zone according to the target temperature and the outlet air temperatures of the other temperature zones.

In an example, when the temperature regulation mode is motor and/or battery waste heat heating or compressor heating in which the rotation speed of the compressor is less than or equal to a minimum rotation speed at which the compressor is operable, the control module 12 is specifically configured to:
adjust the opening value of the air mixing damper in each temperature zone according to the target temperature and the outlet air temperature of each temperature zone.

In an example, the control module 12 is specifically configured to:
determine a target temperature difference according to a difference between the outlet air temperature and the target temperature; and
determine the opening value of the air mixing damper according to a product of the target temperature difference and a preset parameter.

In the control apparatus provided in the embodiment of the present invention, the temperature adjustment demand of the temperature zone is determined according to air output at the air outlet corresponding to the temperature zone.

The control apparatus 10 for the heat pump system of the multi-temperature zone air conditioning box provided in the embodiment of the present invention may execute the above method embodiment, and for its specific implementation principle and technical effect, reference may be made to the above method embodiment, which will not be described in this embodiment.

FIG. 4 shows a schematic structural diagram of hardware of a vehicle-mounted terminal provided in an embodiment of the present invention. As shown in FIG. 4, a vehicle-mounted terminal 20 is configured to implement the operations corresponding to the vehicle-mounted terminal in any of the above method embodiments. The vehicle-mounted terminal 20 of this embodiment may include a memory 21, a processor 22 and a communication interface 24.

The memory 21 is configured to store computer programs. The memory 21 may include a high speed random access memory (RAM), or a non-volatile memory (NVM) such as at least one disk memory, or may be a USB flash disk, a mobile hard disk, a read-only memory, a magnetic disk or an optical disk.

The processor 22 is configured to execute the computer programs stored in the memory to implement the control method for the heat pump system of the multi-temperature zone air conditioning box in the above embodiments. For details, please refer to the related description in the aforementioned method embodiments. The processor 22 may be a central processing unit (CPU), and may also be other general processors, a digital signal processor (DSP), an application specific integrated circuit (ASIC), etc. The general processor may be a microprocessor or the processor may be any conventional processor, etc. The steps of the method disclosed in combination with the invention may be directly embodied as the completion of execution by a hardware processor, or the completion of execution by a combination of hardware and software modules in the processor.

In an implementation, the memory 21 may be standalone, and may also be integrated with the processor 22.

When the memory 21 is a device independent of the processor 22, the vehicle-mounted terminal 20 may further include a bus 23. The bus 23 is used to connect the memory 21 and the processor 22. The bus 23 may be an industry standard architecture (ISA) bus, a peripheral component interconnect (PCI) bus or an extended industry standard architecture (EISA) bus, etc. The bus may be divided into an address bus, a data bus, a control bus, etc. For the convenience of representation, the bus in the drawings of the present invention is not limited to only one bus or one type of bus.

The communication interface 24 is configured to acquire an outlet air temperature through a temperature sensor disposed at each air outlet of a vehicle, and to send a control instruction to an air mixing damper to instruct the air mixing damper to adjust the amount of unheated air that is mixed in according to a calculated opening value, so that the outlet air temperature of each temperature zone reaches a target temperature.

The vehicle-mounted terminal provided in this embodiment may be configured to execute the control method for the heat pump system of the multi-temperature zone air conditioning box described above, and its implementation mode and technical effect are similar thereto, which will not be repeated in this embodiment.

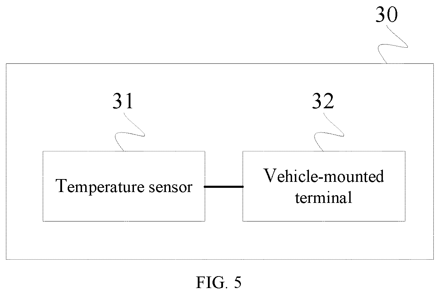

FIG. 5 shows a schematic structural diagram of a vehicle provided in an embodiment of the present invention. As shown in FIG. 5, a vehicle 30 includes a temperature sensor 31 provided at each air outlet and a vehicle-mounted terminal 32 as shown in FIG. 5.

The present invention also provides a computer-readable storage medium having computer instructions stored therein. The computer instructions, when executed by the processor, are used for implementing the methods provided in the above various embodiments.

The computer-readable storage medium may be a computer storage medium, and may also be a communication medium. The communication medium includes any medium that facilitates the transfer of computer programs from one place to another. The computer storage medium may be any available medium that may be accessed by a general-purpose or special-purpose computer. For example, the computer-readable storage medium is coupled to the processor, so that the processor may read information from and write information to the computer-readable storage medium. Of course, the computer-readable storage medium may also be a constituent part of the processor. The processor and the computer-readable storage medium may be located in an application specific integrated circuit (ASIC). In addition, the ASIC may be located in an user equipment. Of course, the processor and the computer-readable storage medium may also exist in a communication device as discrete components.

Specifically, the computer-readable storage medium may be realized by any type of volatile or nonvolatile storage device or their combination, such as a static random-access memory (SRAM), an electrically-erasable programmable read-only memory (EEPROM), an erasable programmable read only memory (EPROM), a programmable read-only memory (PROM), a read-only memory (ROM), a magnetic memory, a flash memory, a magnetic disk or an optical disk. The storage medium may be any available medium that may be accessed by a general-purpose or special-purpose computer.

The present invention also provides a computer program product, which includes computer instructions stored in a computer-readable storage medium. At least one processor of the device may read the computer instructions from the computer-readable storage medium, and the at least one processor executes the computer instructions to cause the device to implement the methods provided in the above various embodiments.

In several embodiments provided in the present invention, it should be understood that the disclosed apparatuses and methods may be realized in other ways. For example, the apparatus embodiments described above are only schematic. For example, the division of modules is only a logical function division, in actual implementation, there may be other division manners, for example, multiple modules may be combined or integrated into another system, or some features may be ignored or not executed. On the other hand, the mutual coupling or direct coupling or communication connection shown or discussed may be indirect coupling or communication connection through some interfaces, apparatus or modules, and may be electrical, mechanical or other forms.

The respective modules may be physically separated, for example, installed in different locations of one device, or installed on different devices, or distributed to multiple network units or multiple processors. The respective modules may also be integrated together, for example, installed in the same device, or integrated in a set of codes. The respective modules may exist in a form of hardware, or may also exist in a form of software, or may also be realized in a form of software and hardware. In the present invention, some or all of the modules may be selected according to actual needs to achieve the purposes of the solution of this embodiment.

When the respective modules are implemented as software function modules, they may be stored in a computer-readable storage medium. The above software function modules are stored in a storage medium, and include several instructions to make a computer device (which may be a personal computer, a server, a network device, etc.) or a processor perform part of the steps of the methods in various embodiments of the present invention.

It should be understood that although the steps in the flowchart in the above embodiments are displayed in sequence as indicated by the arrows, these steps are not necessarily executed in sequence as indicated by the arrows. Unless explicitly stated herein, the execution of these steps is not strictly limited in order, and they may be executed in other orders. Moreover, at least a part of the steps in the drawings may include a plurality of sub-steps or stages, which may not necessarily be completed at the same time, but may be executed at different times, and the execution order may not necessarily be sequential, but may be executed in turn or alternately with other steps or at least a part of sub-steps or stages of other steps.

Finally, it should be noted that the above embodiments are only used to illustrate the technical solutions of the present invention, but not to limit it. Although the present invention has been described in detail with reference to the aforementioned embodiments, it should be understood by those of ordinary skill in the art that the technical solutions described in the aforementioned embodiments may still be modified, or some or all of their technical features may be equivalently replaced.

## Claims

1. A control method for a heat pump system of a multi-temperature zone air conditioning box, comprising:
acquiring (S101) a temperature regulation mode and a target temperature for a vehicle, and a temperature adjustment demand and an outlet air temperature of each temperature zone of the vehicle, wherein the outlet air temperature is measured by a temperature sensor at an air outlet corresponding to the temperature zone; and
adjusting (S102) an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature;
**characterized in that**
the temperature adjustment demand of the temperature zone is determined according to air output at the air outlet corresponding to the temperature zone.

2. The method according to claim 1, wherein the temperature regulation mode comprises one or more of compressor refrigeration, heater heating, motor and/or battery waste heat heating and compressor heating.

3. The method according to claim 2, wherein when the temperature regulation mode is any one of compressor refrigeration, heater heating and compressor heating in which a rotation speed of a compressor is greater than a minimum rotation speed at which the compressor is operable, the adjusting the opening value of the air mixing damper in each temperature zone according to the temperature regulation mode, the target temperature, and the temperature adjustment demand and the outlet air temperature of each temperature zone comprises:
determining a first temperature zone with a maximum temperature adjustment demand according to the temperature adjustment demand of each temperature zone;
setting the opening value of the air mixing damper in the first temperature zone as a fixed value; and
adjusting opening values of air mixing dampers in other temperature zones except for the first temperature zone according to the target temperature and the outlet air temperatures of the other temperature zones.

4. The method according to claim 2, wherein when the temperature regulation mode is motor and/or battery waste heat heating or compressor heating in which a rotation speed of a compressor is less than or equal to a minimum rotation speed at which the compressor is operable, the adjusting the opening value of the air mixing damper in each temperature zone according to the temperature regulation mode, the target temperature, and the temperature adjustment demand and the outlet air temperature of each temperature zone comprises:
adjusting the opening value of the air mixing damper in each temperature zone according to the target temperature and the outlet air temperature of each temperature zone.

5. The method according to claim 4, wherein the adjusting the opening value of the air mixing damper in each temperature zone according to the target temperature and the outlet air temperature of each temperature zone comprises:
determining a target temperature difference according to a difference between the outlet air temperature and the target temperature; and
determining the opening value of the air mixing damper according to a product of the target temperature difference and a preset parameter.

6. A control apparatus (10) for a heat pump system of a multi-temperature zone air conditioning box, comprising:
an acquisition module (11), configured to acquire a temperature regulation mode and a target temperature for a vehicle, and a temperature adjustment demand and an outlet air temperature of each temperature zone of the vehicle; and
a control module (12), configured to adjust an opening value of an air mixing damper in each temperature zone according to the temperature regulation mode, the target temperature, and the temperature adjustment demand and the outlet air temperature of each temperature zone, so that the outlet air temperature of each temperature zone reaches the target temperature;
**characterized in that**
the temperature adjustment demand of the temperature zone is determined according to air output at the air outlet corresponding to the temperature zone.

7. The apparatus (10) according to claim 6, wherein the temperature regulation mode comprises one or more of compressor refrigeration, heater heating, motor and/or battery waste heat heating and compressor heating.

8. The apparatus (10) according to claim 7, wherein when the temperature regulation mode is any one of compressor refrigeration, heater heating and compressor heating in which a rotation speed of a compressor is greater than a minimum rotation speed at which the compressor is operable, the control module (12) is specifically configured to:
determine a first temperature zone with a maximum temperature adjustment demand according to the temperature adjustment demand of each temperature zone;
set the opening value of the air mixing damper in the first temperature zone as a fixed value; and
adjust opening values of air mixing dampers in other temperature zones except for the first temperature zone according to the target temperature and the outlet air temperatures of the other temperature zones.

9. The apparatus (10) according to claim 7, wherein when the temperature regulation mode is motor and/or battery waste heat heating or compressor heating in which a rotation speed of a compressor is less than or equal to a minimum rotation speed at which the compressor is operable, the control module (12) is specifically configured to:
adjust the opening value of the air mixing damper in each temperature zone according to the target temperature and the outlet air temperature of each temperature zone.

10. The apparatus (10) according to claim 9, wherein the control module (12) is specifically configured to:
determine a target temperature difference according to a difference between the outlet air temperature and the target temperature; and
determine the opening value of the air mixing damper according to a product of the target temperature difference and a preset parameter.

11. A vehicle-mounted terminal (20, 32), comprising: a memory (21) and a processor (22);
wherein
the memory (21) is configured to store computer instructions;
**characterized in that** the
processor (22) is configured to implement the control method for the heat pump system of the multi-temperature zone air conditioning box of any one of claims 1 to 5 according to the computer instructions stored in the memory (21).

12. A vehicle (30), **characterized in that** each air outlet of the vehicle (30) is provided with a temperature sensor (31), and the vehicle (30) is provided with the vehicle-mounted terminal (20, 32) according to claim 11.

13. A computer-readable storage medium having computer instructions stored therein, **characterized in that** when the computer instructions are executed by a processor, the control method for the heat pump system of the multi-temperature zone air conditioning box according to any one of claims 1 to 5 is implemented.

14. A computer program product comprising computer instructions, **characterized in that** the computer instructions, when executed by a processor, implement the control method for the heat pump system of the multi-temperature zone air conditioning box according to any one of claims 1 to 5.

## Patentansprüche

1. Verfahren zum Steuern eines Wärmepumpensystems eines Klimaanlagegeräts mit mehreren Temperaturzonen, das umfasst:
Erfassen (S101) eines Temperaturregelmodus und einer Zieltemperatur für ein Fahrzeug und eines Temperaturanpassungsbedarfs und einer Ablufttemperatur jeder Temperaturzone des Fahrzeugs, wobei die Ablufttemperatur durch einen Temperatursensor an einem Luftauslass gemessen wird, der der Temperaturzone entspricht; und
Anpassen (S102) eines Öffnungswerts einer Luftmischklappe in jeder Temperaturzone gemäß dem Temperaturregelmodus, der Zieltemperatur und dem Temperaturanpassungsbedarf und der Ablufttemperatur jeder Temperaturzone, so dass die Ablufttemperatur jeder Temperaturzone die Zieltemperatur erreicht;
**dadurch gekennzeichnet, dass** der Temperaturanpassungsbedarf der Temperaturzone gemäß einer Luftausgabe an dem Luftauslass bestimmt wird, der der Temperaturzone entspricht.

2. Verfahren nach Anspruch 1, wobei der Temperaturregelmodus eines oder mehrere von einer Verdichterkühlung, einer Heizungserhitzung, einer Motor- und/oder Batterieabwärmeerhitzung und einer Verdichtererhitzung umfasst.

3. Verfahren nach Anspruch 2, wobei, wenn der Temperaturregelmodus eines von einer Verdichterkühlung, einer Heizungserhitzung und einer Verdichtererhitzung ist, wobei eine Drehzahl eines Verdichters höher als eine Mindestdrehzahl ist, mit der der Verdichter betreibbar ist, das Anpassen des Öffnungswerts der Luftmischklappe in jeder Temperaturzone gemäß dem Temperaturregelmodus, der Zieltemperatur und dem Temperaturanpassungsbedarf und der Ablufttemperatur jeder Temperaturzone umfasst:
Bestimmen einer ersten Temperaturzone mit einem maximalen Temperaturanpassungsbedarf gemäß dem Temperaturanpassungsbedarf jeder Temperaturzone;
Einstellen des Öffnungswerts der Luftmischklappe in der ersten Temperaturzone als Festwert; und
Anpassen von Öffnungswerten von Luftmischklappen in anderen Temperaturzonen außer der ersten Temperaturzone gemäß der Zieltemperatur und den Ablufttemperaturen der anderen Temperaturzonen.

4. Verfahren nach Anspruch 2, wobei, wenn der Temperaturregelmodus Motor- und/oder Batterieabwärmeerhitzung oder Verdichtererhitzung ist, wobei eine Drehzahl eines Verdichters höchstens eine Mindestdrehzahl ist, mit der der Verdichter betreibbar ist, das Anpassen des Öffnungswerts der Luftmischklappe in jeder Temperaturzone gemäß dem Temperaturregelmodus, der Zieltemperatur und dem Temperaturanpassungsbedarf und der Ablufttemperatur jeder Temperaturzone umfasst:
Anpassen des Öffnungswerts der Luftmischklappe in jeder Temperaturzone gemäß der Zieltemperatur und der Ablufttemperatur jeder Temperaturzone.

5. Verfahren nach Anspruch 4, wobei das Anpassen des Öffnungswerts der Luftmischklappe in jeder Temperaturzone gemäß der Zieltemperatur und der Ablufttemperatur jeder Temperaturzone umfasst:
Bestimmen eines Zieltemperaturunterschieds gemäß einem Unterschied zwischen der Ablufttemperatur und der Zieltemperatur; und
Bestimmen des Öffnungswerts der Luftmischklappe gemäß einem Produkt des Zieltemperaturunterschieds und eines voreingestellten Parameters.

6. Steuervorrichtung (10) für ein Wärmepumpensystem eines Klimaanlagegeräts mit mehreren Temperaturzonen, die umfasst:
ein Erfassungsmodul (11), das zum Erfassen eines Temperaturregelmodus und einer Zieltemperatur für ein Fahrzeug und eines Temperaturanpassungsbedarfs und einer Ablufttemperatur jeder Temperaturzone des Fahrzeugs konfiguriert ist; und
ein Steuermodul (12), das zum Anpassen eines Öffnungswerts einer Luftmischklappe in jeder Temperaturzone gemäß dem Temperaturregelmodus, der Zieltemperatur und dem Temperaturanpassungsbedarf und der Ablufttemperatur jeder Temperaturzone konfiguriert ist, so dass die Ablufttemperatur jeder Temperaturzone die Zieltemperatur erreicht;
**dadurch gekennzeichnet, dass** der Temperaturanpassungsbedarf der Temperaturzone gemäß einer Luftausgabe an dem Luftauslass bestimmt wird, der der Temperaturzone entspricht.

7. Vorrichtung (10) nach Anspruch 6, wobei der Temperaturregelmodus eines oder mehrere von Verdichterkühlung, Heizungserhitzung, Motor- und/oder Batterieabwärmeerhitzung und Verdichtererhitzung umfasst.

8. Vorrichtung (10) nach Anspruch 7, wobei, wenn der Temperaturregelmodus eines von einer Verdichterkühlung, einer Heizungserhitzung und einer Verdichtererhitzung ist, wobei eine Drehzahl eines Verdichters höher als eine Mindestdrehzahl ist, mit der der Verdichter betreibbar ist, das Steuermodul (12) spezifisch dazu konfiguriert ist:
Bestimmen einer ersten Temperaturzone mit einem maximalen Temperaturanpassungsbedarf gemäß dem Temperaturanpassungsbedarf jeder Temperaturzone;
Einstellen des Öffnungswerts der Luftmischklappe in der ersten Temperaturzone als Festwert; und
Anpassen von Öffnungswerten von Luftmischklappen in anderen Temperaturzonen außer der ersten Temperaturzone gemäß der Zieltemperatur und den Ablufttemperaturen der anderen Temperaturzonen.

9. Vorrichtung (10) nach Anspruch 7, wobei, wenn der Temperaturregelmodus Motor- und/oder Batterieabwärmeerhitzung oder Verdichtererhitzung ist, wobei eine Drehzahl eines Verdichters höchstens eine Mindestdrehzahl ist, mit der der Verdichter betreibbar ist, das Steuermodul (12) spezifisch dazu konfiguriert ist:
Anpassen des Öffnungswerts der Luftmischklappe in jeder Temperaturzone gemäß der Zieltemperatur und der Ablufttemperatur jeder Temperaturzone.

10. Vorrichtung (10) nach Anspruch 9, wobei das Steuermodul (12) spezifisch dazu konfiguriert ist:
Bestimmen eines Zieltemperaturunterschieds gemäß einem Unterschied zwischen der Ablufttemperatur und der Zieltemperatur; und
Bestimmen des Öffnungswerts der Luftmischklappe gemäß einem Produkt des Zieltemperaturunterschieds und eines voreingestellten Parameters.

11. Fahrzeuginstalliertes Endgerät (20, 32), das umfasst: einen Speicher (21) und einen Prozessor (22);
wobei der Speicher (21) zum Speichern von Computeranweisungen konfiguriert ist;
**dadurch gekennzeichnet, dass** der Prozessor (22) dazu konfiguriert ist, das Verfahren zum Steuern des Wärmepumpensystems des Klimaanlagengeräts mit mehreren Temperaturzonen nach einem der Ansprüche 1 bis 5 gemäß den Computeranweisungen umzusetzen, die in dem Speicher (21) gespeichert sind.

12. Fahrzeug (30), **dadurch gekennzeichnet, dass** jeder Luftauslass des Fahrzeugs (30) mit einem Temperatursensor (31) versehen ist und das Fahrzeug (30) mit dem fahrzeuginstallierten Endgerät (20, 32) nach Anspruch 11 versehen ist.

13. Computerlesbares Speichermedium mit darauf gespeicherten Computeranweisungen, **dadurch gekennzeichnet, dass**, wenn die Computeranweisungen von einem Prozessor ausgeführt werden, das Verfahren zum Steuern des Wärmepumpensystems des Klimaanlagengeräts mit mehreren Temperaturzonen nach einem der Ansprüche 1 bis 5 umgesetzt wird.

14. Computerprogrammprodukt, das Computeranweisungen umfasst, **dadurch gekennzeichnet, dass** die Computeranweisungen, wenn sie von einem Prozessor ausgeführt werden, das Verfahren zum Steuern des Wärmepumpensystems des Klimaanlagengeräts mit mehreren Temperaturzonen nach einem der Ansprüche 1 bis 5 umsetzen.

## Revendications

1. Procédé de commande d'un système de pompe à chaleur d'une boîte de climatisation de zone à plusieurs températures, comprenant :
l'acquisition (S101) d'un mode de régulation de température et d'une température cible pour un véhicule, ainsi qu'une demande de réglage de température et d'une température d'air de sortie de chaque zone de température du véhicule, la température d'air de sortie étant mesurée par un capteur de température au niveau d'une sortie d'air correspondant à la zone de température ; et
le réglage (S102) d'une valeur d'ouverture d'un registre de mélange d'air dans chaque zone de température en fonction du mode de régulation de température, de la température cible, de la demande de réglage de température et de la température de l'air de sortie de chaque zone de température, de sorte que la température de l'air de sortie de chaque zone de température atteigne la température cible ;
**caractérisé en ce que** la demande de réglage de température de la zone de température est déterminée en fonction du débit d'air à la sortie d'air correspondant à la zone de température.

2. Procédé selon la revendication 1, dans lequel le mode de régulation de température comprend un ou plusieurs éléments parmi la réfrigération par compresseur, le chauffage par chauffage, le chauffage par chaleur résiduelle du moteur et/ou de la batterie et le chauffage par compresseur.

3. Procédé selon la revendication 2, dans lequel, lorsque le mode de régulation de température est l'un quelconque parmi la réfrigération par compresseur, le chauffage par chauffage et le chauffage par compresseur dans lequel la vitesse de rotation du compresseur est supérieure à la vitesse minimale de fonctionnement du compresseur, le réglage de la valeur d'ouverture du registre de mélange d'air dans chaque zone de température en fonction du mode de régulation de température, de la température cible, de la demande de réglage de température et de la température de sortie de chaque zone de température comprend :
la détermination d'une première zone de température avec une demande de réglage de température maximale en fonction de la demande de réglage de température de chaque zone de température ;
la définition de la valeur d'ouverture du registre de mélange d'air dans la première zone de température comme valeur fixe ; et
le réglage des valeurs d'ouverture des registres de mélange d'air dans d'autres zones de température, à l'exception de la première zone de température, en fonction de la température cible et des températures de l'air de sortie des autres zones de température.

4. Procédé selon la revendication 2, dans lequel, lorsque le mode de régulation de température est le chauffage par chaleur résiduelle du moteur et/ou de la batterie ou le chauffage par compresseur, dans lequel la vitesse de rotation du compresseur est inférieure ou égale à la vitesse minimale de fonctionnement du compresseur, le réglage de la valeur d'ouverture du registre de mélange d'air dans chaque zone de température en fonction du mode de régulation de température, de la température cible, de la demande de réglage de température et de la température de l'air de sortie de chaque zone de température comprend :
le réglage de la valeur d'ouverture du registre de mélange d'air dans chaque zone de température en fonction de la température cible et de la température de l'air de sortie de chaque zone de température.

5. Procédé selon la revendication 4, dans lequel le réglage de la valeur d'ouverture du registre de mélange d'air dans chaque zone de température en fonction de la température cible et de la température de l'air de sortie de chaque zone de température comprend :
la détermination d'une différence de température cible en fonction d'une différence entre la température de l'air de sortie et la température cible ; et
la détermination de la valeur d'ouverture du registre de mélange d'air en fonction d'un produit de la différence de température cible et d'un paramètre prédéfini.

6. Appareil de commande (10) pour un système de pompe à chaleur d'une boîte de climatisation de zone à plusieurs températures, comprenant :
un module d'acquisition (11), configuré pour acquérir un mode de régulation de température et une température cible pour un véhicule, ainsi qu'une demande de réglage de température et une température d'air de sortie de chaque zone de température du véhicule ; et
un module de commande (12), configuré pour ajuster une valeur d'ouverture d'un registre de mélange d'air dans chaque zone de température en fonction du mode de régulation de température, de la température cible, de la demande de réglage de température et de la température de l'air de sortie de chaque zone de température, de sorte que la température de l'air de sortie de chaque zone de température atteigne la température cible ;
**caractérisé en ce que** la demande de réglage de température de la zone de température est déterminée en fonction du débit d'air à la sortie d'air correspondant à la zone de température.

7. Appareil (10) selon la revendication 6, dans lequel le mode de régulation de température comprend un ou plusieurs éléments parmi la réfrigération par compresseur, le chauffage par chauffage, le chauffage par chaleur résiduelle du moteur et/ou de la batterie et le chauffage par compresseur.

8. Appareil (10) selon la revendication 7, dans lequel, lorsque le mode de régulation de température est l'un quelconque parmi la réfrigération par compresseur, le chauffage par chauffage et le chauffage par compresseur dans lequel la vitesse de rotation d'un compresseur est supérieure à la vitesse de rotation minimale à laquelle le compresseur est opérationnel, le module de commande (12) est spécifiquement configuré pour :
déterminer une première zone de température avec une demande de réglage de température maximale en fonction de la demande de réglage de température de chaque zone de température ;
définir la valeur d'ouverture du registre de mélange d'air dans la première zone de température comme valeur fixe ; et
ajuster les valeurs d'ouverture des registres de mélange d'air dans d'autres zones de température, à l'exception de la première zone de température, en fonction de la température cible et des températures de l'air de sortie des autres zones de température.

9. Appareil (10) selon la revendication 7, dans lequel, lorsque le mode de régulation de température est le chauffage par chaleur résiduelle du moteur et/ou de la batterie ou le chauffage par compresseur, dans lequel la vitesse de rotation du compresseur est inférieure ou égale à la vitesse minimale de fonctionnement du compresseur, le module de commande (12) est spécifiquement configuré pour :
ajuster la valeur d'ouverture du registre de mélange d'air dans chaque zone de température en fonction de la température cible et de la température de l'air de sortie de chaque zone de température.

10. Appareil (10) selon la revendication 9, dans lequel le module de commande (12) est spécifiquement configuré pour :
déterminer une différence de température cible en fonction d'une différence entre la température de l'air de sortie et la température cible ; et
déterminer la valeur d'ouverture du registre de mélange d'air en fonction d'un produit de la différence de température cible et d'un paramètre prédéfini.

11. Terminal embarqué (20, 32), comprenant : une mémoire (21) et un processeur (22) ;
dans lequel la mémoire (21) est configurée pour stocker des instructions informatiques ;
**caractérisé en ce que** le processeur (22) est configuré pour mettre en œuvre le procédé de commande du système de pompe à chaleur de la boîte de climatisation de zone à plusieurs températures selon l'une quelconque des revendications 1 à 5 en fonction des instructions informatiques stockées dans la mémoire (21).

12. Véhicule (30), **caractérisé en ce que** chaque sortie d'air du véhicule (30) est équipée d'un capteur de température (31), et le véhicule (30) est équipé du terminal embarqué (20, 32) selon la revendication 11.

13. Support de stockage lisible par ordinateur contenant des instructions informatiques, **caractérisé en ce que** lorsque les instructions informatiques sont exécutées par un processeur, le procédé de commande du système de pompe à chaleur de la boîte de climatisation de zone à plusieurs températures selon l'une quelconque des revendications 1 à 5 est mis en œuvre.

14. Produit programme informatique comprenant des instructions informatiques, **caractérisé en ce que** les instructions informatiques, lorsqu'elles sont exécutées par un processeur, mettent en œuvre le procédé de commande du système de pompe à chaleur de la boîte de climatisation de zone à plusieurs températures selon l'une quelconque des revendications 1 à 5.
